# EUROPEAN PATENT APPLICATION

(11) **EP 2 799 202 A2**
(43) Date of publication of application: **05.11.2014**
(21) Application number: 13168767.5
(22) Date of filing: 22.05.2013
(51) Int. Cl.: B29C 43/00, B29C 45/00, B29K 77/00, B29L 23/00, B29L 31/00

(54) **Hollow body for a motor vehicle**

(30) Priority: 19.04.2013 EP 13164567
(71) Applicant: Inergy Automotive Systems Research (Société Anonyme), 1120 Bruxelles (BE)
(72) Inventor: De Keyzer, Pierre, 1050 Bruxelles (BE); Vanschaftingen, Jules-Joseph, 1300 WAVRE (BE)
(74) Representative: Remy, Vincent Noel Paul

(57) **Abstract**

A hollow body for a motor vehicle comprising at least two parts, which have been joined together to form said hollow body, at least one of the parts being injection moulded or injection compression moulded from a polyamide or a polyamide composition having a melt shear viscosity higher than 100 Pa.s at a shear rate of 100s⁻¹ and 260°C.

## Description

The present invention relates to a thermoplastic hollow body and to a process for manufacturing it. In particular it relates to a hollow body composed of polyamide.

Thermoplastic hollow bodies, such as fuel tanks and filler pipes, are widely used in motor vehicles.

Hollow bodies composed of polyamide are known. Such hollow bodies of polyamide can either be produced by blow moulding or injection moulding. One problem with the blow moulding process is that it imposes a restriction on the shape and dimensions of the hollow body which can be produced. Injection moulding process is a solution to this problem.

It is known to use specific polyamide grades for blow moulding (called hereafter "blow moulding grade of polyamide") and specific polyamide grades for injection moulding (called hereafter "injection moulding grade of polyamide"). The blow moulding grade of polyamide can be characterised by a melt shear viscosity which is higher than 100 Pa.s at a shear rate of 100s⁻¹ and 260°C. The injection moulding grade of polyamide can be characterised by a melt shear viscosity which is lower than 100 Pa.s at a shear rate of 100s⁻¹ and 260°C.

There is a general desirability to use polyamide-6 (PA-6) in order to reduce the material and production costs of the injection moulded hollow bodies.

Thermoplastic hollow bodies for motor vehicles are required to exhibit high safety performance, particularly with regard to fire resistance and impact resistance. Such hollow bodies are required to meet minimum statutory industry specified performance criteria both with respect to creep resistance when the tank is subjected to a fire and crash test resistance when the tank is subjected to an impact. In addition, such hollow bodies have to meet sealing and permeability standards in relation to the type of use for which they are designed and the environmental requirements that they have to satisfy.

During winter or in cold climate, salt can be spread over the road in order to melt snow and ice formed thereon. For example, salt such as sodium chloride or calcium chloride can be used for this purpose. The salt can come into contact with metallic parts of a vehicle or with metallic components placed on the road (for example guardrails). The interaction between the salt and these metallic parts or components can lead to the formation of ZnCl₂.

Hollow bodies for motor vehicles are required to exhibit high resistance to ZnCl₂.

It is known that polyamide-12 and polyamide-10,10 can provide good ZnCl₂ resistance. However, these materials are more expensive compare to polyamide-6.

It is also known that aromatic or semi-aromatic polyamides or copolyamides can provide good ZnCl₂ resistance. However, these materials are more expensive compare to polyamide-6.

While there would be a desire to use injection moulding for the production of automobile hollow bodies of polyamide-6, nevertheless, to the applicant's knowledge there has to date been no technically and commercially acceptable process for producing automobile hollow bodies by injection moulding of polyamide-6. There is thus a need for such a method of injection moulding a polyamide automobile hollow body (i.e. fuel tank or filler pipe).

It is thus an aim of the present invention to provide an injection moulded automobile hollow body of polyamide which at least partially meets the above-stated needs.

It is, therefore, one aspect of the present invention to provide an automobile hollow body comprising at least two parts, which have been joined together to form said hollow body, at least one of the parts being injection moulded or injection compression moulded from a polyamide or a polyamide composition having a melt shear viscosity higher than 100 Pa.s at a shear rate of 100s⁻¹ and 260°C.

The present invention is predicated on the surprising finding by the Applicant that by using the blow moulding grade of polyamide in injection moulding process, the injection moulded part(s) of polyamide have good creep resistance, rigidity and impact resistance yet also provide good ZnCl₂ resistance. According to the present invention, the blow moulding grade of polyamide can be characterised by a melt shear viscosity which is higher than 100 Pa.s at a shear rate of 100s⁻¹ and 260°C.

According to the present invention, the injection moulded part(s) can be either injection moulded or injection compression moulded. In the injection compression moulding technique, an accurately measured quantity of polyamide material is injected into a mould cavity before it has been fully closed. As the parts of the mould are brought together, the injected polyamide material is compressed and made to fill the cavity by the force applied to close the mould rather than by the pressure applied to inject the polyamide material into the mould. As a consequence, it is possible to achieve much higher length to thickness ratios than achievable by conventional injection moulding. In addition, injection compression moulding present the advantage (compared to injection moulding) of reducing material stress during the manufacturing of large parts.

Preferably, the polyamide or the polyamide composition has a melt shear viscosity of from 300 to 1000 Pa.s at a shear rate of 100s⁻¹ and 260°C. If the melt shear viscosity is lower than 300 Pa.s, then the creep resistance, impact resistance and ZnCl₂ resistance of the injection moulded part(s) may be insufficient for use in a motor vehicle. If the melt shear viscosity is higher than 1000 Pa.s, then the processability of the material may not be compatible with the moulding process. Indeed, the pressure needed to fill the mould completely could be excessive, which could induce a lot of residual stress. This issue could result in an incomplete filling, especially in the case of large (and relatively thin) parts such as fuel tank or filler pipes.

Advantageously, the polyamide or the polyamide of the polyamide composition is at least one selected from the group consisting of polyamide-6 and polyamide-6,6.

It was found, in particular for polyamide-6 and polyamide-6,6, that good creep resistance, impact resistance and ZnCl₂ resistance could be obtained if during injection moulding , the melt shear viscosity of the polyamide is at least 600 Pa.s, preferably at least 700 Pa.s, most preferably around 800 Pa.s at a shear rate of 100s⁻¹ and 260°C.

In a particular embodiment of the present invention, at least one of the injection moulded parts comprises a fibrous reinforcement comprising glass fibres. In one particular embodiment, the fibrous reinforcement is overmoulded by the polyamide or the polyamide composition. In another particular embodiment, the fibrous reinforcement is welded on the surface of the polyamide injection moulded parts.

Advantageously, the hollow body according to the present invention is a vehicle tank or a vehicle filler pipe.

A vehicle tank that is injection moulded or injection compression moulded from a polyamide or a polyamide composition having a melt shear viscosity higher than 100 Pa.s at a shear rate of 100s⁻¹ and 260°C is particularly well suited for use in hybrid vehicle. Generally, tanks for hybrid vehicle have to withstand high internal pressure (up to 400mbar) and negative pressure (down to - 150mbar).

Mechanical properties of polyamide or polyamide composition having a melt shear viscosity higher than 100 Pa.s are improved compared to polyamide or polyamide composition having a melt shear viscosity lower than 100Pa.s at a shear rate of 100s⁻¹ and 260°C. In particular, the creep resistance and the rigidity are enhanced. This provides a better resistance to internal tank pressure and reduces the overall deformation of the tank.

It is another aspect of the present invention to provide a process for producing at least one part of a hollow body for a motor vehicle, the process comprising a step of injection moulding or injection compression moulding a polyamide or a polyamide composition having a melt shear viscosity higher than 100 Pa.s at a shear rate of 100s⁻¹ and 260°C.

It is yet another aspect of the present invention to provide a process for producing a hollow body for a motor vehicle, the process comprising a step of joining together at least two injection moulded parts. Advantageously, the injection moulded parts are welded together.

In accordance with the invention, at least one part for an automobile fuel tank is produced by injection moulding (or injection compression moulding) the polyamide (or polyamide composition) described above. Thereafter, two or more parts are joined together, for example by welding, to form an entire fuel tank. Generally, each injection moulded polyamide part comprises a fuel tank half, and the two halves are welded together to form an entire fuel tank.

The use of an injection moulding or injection compression moulding process in accordance with the present invention enables far more complicated geometric structures to be produced than using the known blow moulding process for producing automobile fuel tanks or filler pipes. The injection moulded parts may incorporate components (for example, a part of a filler neck, a baffle, a reservoir, etc.) or other complicated geometric features (for example, a part of a reinforcement device).

With the process according to the invention, monolayer polyamide fuel tanks having low permeability, good rigidity and high resistance to ZnCl₂ can be obtained.

The present invention (i.e. injection moulding or injection compression moulding using injection moulding grade) allows to obtain a hollow body that presents good creep, good mechanical resistance and high resistance to ZnCl₂.

It is to note that hollow body obtained by blow moulding using blow moulding grade presents low resistance to ZnCl₂.

Further, it is to note that hollow body using injection moulding grade presents limited creep and mechanical resistance.

## Claims

1. A hollow body for a motor vehicle comprising at least two parts, which have been joined together to form said hollow body, **characterised in that** at least one of the parts is injection moulded or injection compression moulded from a polyamide or a polyamide composition having a melt shear viscosity higher than 100 Pa.s at a shear rate of 100s⁻¹ and 260°C.

2. Hollow body according to claim 1, wherein the polyamide or the polyamide composition has a melt shear viscosity of from 300 to 1000 Pa.s at a shear rate of 100s⁻¹ and 260°C.

3. Hollow body according to claim 1 or 2, wherein the polyamide or the polyamide of the polyamide composition is at least one selected from the group consisting of polyamide-6 and polyamide-6,6.

4. Hollow body according to any one of claims 1 to 3, which comprises two of the injection moulded parts that have been joined together.

5. Hollow body according to claim 4, wherein the two injection moulded parts have been joined together by welding.

6. Hollow body according to any one of claims 1 to 5, wherein at least one of the injection moulded parts comprises a fibrous reinforcement comprising glass fibres.

7. Hollow body according to any one of claims 1 to 6, wherein the hollow body is a vehicle tank or a vehicle filler pipe.

8. A process for producing at least one part of a hollow body for a motor vehicle, said at least one part being moulded from a polyamide or a polyamide composition, **characterised in that** the process comprises injection moulding or injection compression moulding of a polyamide or a polyamide composition having a melt shear viscosity higher than 100 Pa.s at a shear rate of 100s⁻¹ and 260°C.

9. Process according to claim 8, wherein the polyamide or the polyamide composition has a melt shear viscosity of from 300 to 1000 Pa.s at a shear rate of 100s⁻¹ and 260°C.

10. Process according to claim 8 or 9, wherein the polyamide or the polyamide of the polyamide composition is at least one selected from the group consisting of polyamide-6 and polyamide-6,6.

11. Process according to claim 10 additionally comprising a later step of joining together at least two injection moulded parts to form said hollow body.

12. Process according to claim 11 wherein at least the two injection moulded parts are welded together.
